# EUROPÄISCHE PATENTSCHRIFT

(11) **EP 1 129 906 B1**
(45) Veröffentlichungstag und Bekanntmachung des Hinweises auf die Patenterteilung: **04.08.2004**
(21) Anmeldenummer: 00121079.8
(22) Anmeldetag: 28.09.2000
(51) Int. Cl.: B60R 1/074, F16D 7/04

(54) **Aussenrückblickspiegel für ein Kraftfahrzeug**
Exterior rear view mirror for vehicles
Rétroviseur extérieur pour un véhicule

(30) Priorität: 29.02.2000 DE 10009579
(43) Veröffentlichungstag der Anmeldung: 05.09.2001
(73) Patentinhaber: Bühler Motor GmbH, 90459 Nürnberg (DE)
(72) Erfinder: Seichter, Werner, 91166 Georgensgmünd (DE)

(56) Entgegenhaltungen:
- WO-A-97/43144
- DE-A- 19 833 672
- US-A- 5 625 502

## Beschreibung

Die Erfindung betrifft einen Außenrückblickspiegel nach dem Oberbegriff des Anspruchs 1, wie et aus der US-A-5625502 bekannt ist.

Ein weiterer Außenrückblickspiegel ist aus der DE-OS 198 33 672 A1 bekannt. Bei dem bekannten Außenrückblickspiegel ist sowohl eine motorische Verstellung des Spiegelkopfs zwischen der Fahrposition und der Parkstellung, als auch eine manuelle Betätigung in oder gegen die Fahrtrichtung möglich. Bei jeder manuellen Betätigung in und entgegen der Fahrtrichtung wird das Zahnrad bei blockiertem Getriebe gezwungen seine Raststellung im Spiegelfuß durch Ausrasten der Rastmittel gegen die Kraft der Druckfeder zu verlassen. Tritt diese manuelle Betätigung sehr häufig auf, dann kann dies zu Abnutzungseffekten an den Rastmitteln führen, wodurch die Rastfunktion beeinträchtigt wird. Dies kann dazu führen, dass der Spiegelkopf nicht mehr vibrationsfrei am Spiegelfuß gehalten gehalten werden kann.

Ein durch äußere Krafteinwirkung auf den Spiegelkopf verursachtes Abklappen entgegen der Fahrtrichtung tritt wesentlich häufiger auf als in Fahrtrichtung.

Daher ist es Aufgabe der vorliegenden Erfindung, bei einem gattungsgemäßen Außenrückblickspiegel beim Abklappen durch eine äußere Kraft entgegen der Fahrtrichtung, die Abnutzung der Rastmittel zu verringern bzw. zu verhindern und den motorischen Rückstellvorgang des Spiegelkopfs in die Fahrposition zu vereinfachen.

Diese Aufgabe wird erfindungsgemäß durch die Merkmale des Anspruchs 1 gelöst.

Durch die hohe Reibkraft zwischen dem Zahnrad und dem Rastring verhält sich der Außenrückblickspiegel bei motorischem Antrieb so wie der vorbekannte Außenrückblickspiegel. Bei Einwirkung einer in Fahrtrichtung gerichteten äußeren Kraft auf den Spiegelkopf rasten die reibschlüssig mit dem Zahnrad verbundenen Rastmittel des Rastrings aus den Rastmitteln des Spiegelfußes aus, weil die Rastmittel so geformt sind, dass sie in dieser Richtung ausrastbar sind, wobei die Reibkraft höher ist als die Ausrastkraft in Fahrtrichtung. Beim Ausrasten aus den Rastmitteln wird auch der motorisch nicht überwindbare Fahrwegbegrenzer zwischen Spiegelkopf und Spiegelfuß überwunden. Der abgeklappte Spiegelkopf kann anschließend motorisch in die Fahrposition zurückgebracht werden. Bei Einwirkung einer entgegen der Fahrtrichtung gerichteten äußeren Kraft auf den Spiegelkopf rasten die Rastmittel des reibschlüssig mit dem Zahnrad verbundenen Rastrings nicht aus den Rastmitteln des Spigelfußes aus, weil die Rastmittel so geformt sind, dass sie in dieser Richtung blockieren. Die Reibkraft zwischen dem Zahnrad und dem Rastring kann aus diesem Grund durch die äußere Kraft überwunden werden, bis der Fahr- bzw. der Klappwegbegrenzer erreicht ist. Anschließend kann der Spiegel motorisch in die Fahrposition zurückgebracht werden, ohne dass ein Synchronisationsvorgang zwischen den Rastmitteln am Rastring und den Rastmitteln am Spiegelfuß eingeleitet werden muss, denn die Zuordnung zwischen Rastring und Spiegelfuß bleibt auch bei diesem erzwungenen Vorgang erhalten. Dies verringert die notwendige Zeit für den Rückstellvorgang und vereinfacht auch die hierfür ggfs. vorhandene Steuerung.

Bei einer bevorzugten Ausführungsform sind die Rastmittel in Form von Rastnocken und Rastausnehmungen ausgebildet, deren Flanken unterschiedlich geneigt sind. Durch die unterschiedliche Neigung der Flanken ist ein Ausrasten nur in eine Richtung möglich. Dabei ist es unerheblich, ob die Rastausnehmungen bzw. die Rastnocken im Rastring oder im Spiegeflfuß angeordnet sind.

Um in allen Situationen eine motorische Rückstellung des Spiegelkopfs in die Fahrposition zu ermöglichen, ist vorgesehen, dass der Spiegelkopf in Bezug auf den Spiegelfuß mehrere Höhenniveaus einnehmen kann, wobei auf allen Höhenniveaus und in allen Drehwinkelstellungen des Spiegelkopfs Reibschluß zwischen dem Zahnrad und dem Rastring besteht, der durch die Druckfeder aufrecht erhalten wird. Die kraftschlüssige Verbindung zwischen dem Rastring und dem Zahnrad würde unterbrochen werden, wenn Teile des Spiegelkopfs im ausgerasteten Zustand auf Teilen des Spiegelfußes aufsitzen würden. Um dies zu verhindern muß in dieser Stellung zumindest ein geringer Spalt zwischen Spiegelkopf und Spiegelfuß in Schwenkachsrichtung vorhanden sein.

Damit ein durch eine äußere Kraft bewirktes Abklappen in Fahrtrichtung möglich ist, muß der Fahrwegbegrenzer zwischen Spiegelkopf und Spiegelfuß überwunden werden und der Spiegelkopf in Bezug auf den Spiegelfuß zwei Höhenniveaus (H, L) einnehmen können. Um vom niedrigen Niveau (L) auf das mittlere Höhenniveau (H) zu gelangen, muß bei einer besonders vorteilhaften Ausführungsform der Erfindung ein drittes Höhenniveau (Z) überwunden werden. Dieses dritte Höhenniveau (Z) soll dabei nicht bleibend eingenommen werden, sondern bei Einwirkung einer äußeren Kraft nur kurzzeitig erreicht und sofort wieder verlassen werden. Das dritte Höhenniveau (Z) soll motorisch weder vom Höhenniveau (L), noch vom Höhenniveau (H) aus erreichbar sein. Dadurch ist ausgeschlossen, dass bei Fehlbedienung des Außenrückblickspiegels ein Einrasten des Rastsrings in die Rastmittel des Spiegelfußes in einer nach vorne in Fahrtrichtung abgeklappten Spiegelposition möglich ist. Diese Fehlbedienung ist dann gegeben, wenn der abgeklappte Spiegel motorisch weiter in Fahrtrichtung betätigt wird, bis der Klappwegbegrenzer erreicht ist. Dann würde sich das Zahnrad so bewegen, als ob es das dritte Höhenniveau erreichen wollte, da dies motorisch nicht möglich ist, blockiert der Antrieb an dieser Stelle. Wäre das dritte Höhenniveau (Z) nicht vorhanden, dann würde der Rastring in die Rastmittel des Spiegelfußes einrasten und der Spiegelkopf unter der Kraft der Druckfeder direkt am Spiegelfuß aufliegen. Damit wäre die reibschlüssige Verbindung zwischen dem Zahnrad und dem Rastring unterbrochen und keine weitere motorische Betätigung mehr möglich.

Damit nicht die Gefahr besteht, dass das dritte Höhenniveau (Z) bleibend erreicht wird, sind gleich im Anschluss an die Rastausnehmungen (20) vorspringende Anformungen vorgesehen. In dieser Position ist das maximale, durch die Einwirkung einer äußeren Kraft auf den Spiegelkopf erzeugte Moment zu erwarten. Das zur Ausrastung notwendige Moment ist so hoch, dass es auf kurzem Weg bzw. in kurzer Zeit nicht soweit abgebaut werden kann dass der Spiegelkopf das dritten Höhenniveau (Z) bleibend erreichen kann.

Es ist zweckmäßig, dass das niedrige Höhenniveau (L) nur zwischen der Fahrposition (F) und der Parkposition (P) möglich ist, dadurch ist gewährleistet, dass keine Situation auftritt, in der ein in Fahrtrichtung nach vorne abgeklappter Spiegel in eine motorisch nicht mehr rückführbare Position geraten kann.

Es ist auch vorgesehen, dass das zweite Höhenniveau (H) nur in nach vorne in Fahrtrichtung abgeklappten Spiegelpositionen (K) möglich ist, damit ist eine Abnutzung der Rastmittel am Spiegelfuß nur beim selteneren Abklappen durch eine äußere Kraft in Fahrtrichtung möglich. Zusätzlich nehmen hierbei die Fahrwegbegrenzer einen Teil der auftretenden Kräfte auf.

Damit sicher ist, dass das dritte Höhenniveau (Z) nur kurzzeitig erreicht wird, ist es notwendig dass das dritte Höhenniveau (Z) nur zwischen der Fahrposition (F) und einer nach vorne in Fahrtrichtung abgeklappten Spiegelposition (K) möglich ist. In dieser Position ist, wie erwähnt, das Moment am größten, das notwendig ist, um den Spiegel überhaupt abklappen zu können, wird dieses aufgebracht, ist es kaum möglich es schnell genug wieder so weit zu verringern, dass das dritte Höhenniveau (Z) beibehalten wird. Es ist auch zweckmäßig die vorspringende Anformung am Rastring bzw. am Spiegelfuß so zu gestalten, dass keine stabile Positionierung auf dem dritten Höhenniveau möglich ist. Würde das dritte Niveau bleibend erreichbar sein, wäre zwar eine motorische Verstellung weiter möglich, jedoch könnte eine Fehlbedienung, wie erwähnt, zu einer Fehlfunktion führen.

Der Übergang zwischen dem mittleren Höhenniveau (H) und dem dritten Höhenniveau (Z) ist vorzugsweise als Anschlag ausgebildet, wobei der Anschlag als in Bezug auf die Schwenkebene geneigte Fläche ausgebildet ist. Dadurch ist es möglich den Spiegel auch von Hand unter Überwindung des dritten Höhenniveaus (Z) in die Fahrposition zurückzubringen. Da das dritte Höhenniveau (Z) motorisch jedoch nicht erreichbar sein soll, ist die Neigung der Fläche des Anschlags entsprechend ausgelegt.

Nach einer bevorzugten Weiterbildung der Erfindung ist die Reibfläche zwischen dem Zahnrad und dem Rastring konusförmig ausgebildet. Durch den Konus wird die Reibkraft zwischen dem Zahnrad und dem Rastring stark erhöht. Durch die Wahl des Neigungswinkels ist die Reibkraft den Erfordernissen anpaßbar.

Eine vorteilhafte Weiterbildung der Erfindung ist dadurch gekennzeichnet, dass am Spiegelkopf ein Stopper und am Spiegelfuß ein Gegenstopper vorgesehen ist, der Stopper in der Fahrposition (F) oder in der Nähe der Fahrposition (F) in Schwenkrichtung an dem Gegenstopper anschlagbar ist, wenn die ausrastbaren Rastmittel sich in einem ausgerasteten Zustand befinden und der Stopper in keiner Schwenkstellung mit dem Gegenstopper anschlagbar ist, wenn die ausrastbaren Rastmittel sich im eingerasteten Zustand befinden. Durch diese Maßnahme wird eine besonders schnelle Synchronisation der Rastmittel an dem Rastring mit den Rastmitteln am Spiegelfuß erreicht, zudem ist es nicht erforderlich den Spiegel bis zu einem Anschlag in der Parkposition zu fahren, um die Synchronisation vornehmen zu können. Dadurch werden erhebliche Wege und Zeiten eingespart.

Ausführungsbeispiele der Erfindung werden nachfolgend anhand der Zeichnung näher erläutert. Es zeigen:
- Fig. 1: eine Prinzipskizze eines Antriebes für einen Außenrückblickspiegel in Fahrposition,
- Fig. 2: eine Prinzipskizze des Antriebs in einer ausgerasteten Stellung,
- Fig. 3: eine Schnittansicht durch ein Zahnrad und einen Rastring,
- Fig. 4: eine Explosionsdarstellung des Antriebs,
- Fig. 5: eine Schnittansicht des Antriebs im Bereich einer Schwenkachse,
- Fig. 6: eine vereinfachte Explosionsdarstellung von Teilen des Antriebs,
- Fig. 7: der Außenrückblickspiegel mit Antrieb,
- Fig. 8: der Außenrückblickspiegel in drei verschiedenen Stellungen,
- Fig. 9: eine vorteilhafte Weiterbildung des Antriebs,
- Fig. 10: eine räumliche Darstellung der Weiterbildung aus Fig. 9,
- Fig. 11: eine Prinzipskizze von Rastmitteln in einer ersten Stellung,
- Fig. 12: eine Prinzipskizze der Rastmittel in einer zweiten Stellung und
- Fig. 13: eine Prinzipskzze der Rastmittel in einer dritten Stellung.

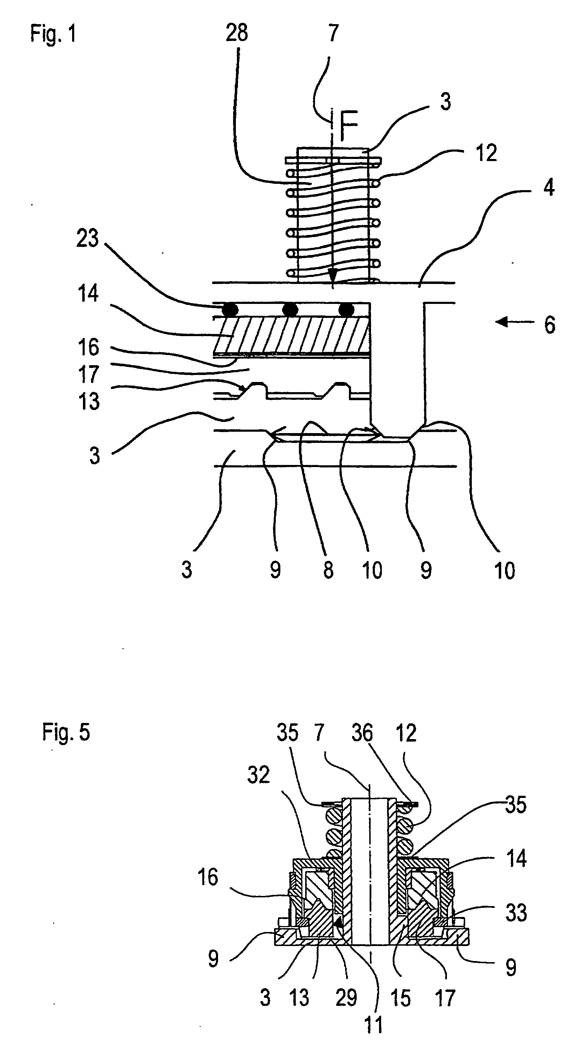

Fig. 1 zeigt eine Prinzipskizze eines Antriebes 6 für einen Kfz-Außenrückblickspiegel in einer Fahrposition, mit einem Spiegelfuß 3, einem Spiegelkopf 4, einem Rastring 17, einem Zahnrad 14, einem Kugellager (23) und einer Druckfeder 12, die eine Kraft F auf die um eine Schwenkachse 7 aufeinander angeordneten Bauteile (Spiegelfuß 3, Rastring 17, Zahnrad 14, Kugellager und Spiegelkopf 4) ausübt. Der Rastring 17 ist dabei über Rastmittel 13 mit dem Spiegelfuß 3 formschlüssig und über Reibflächen 16 mit dem Zahnrad 14 reibschlüssig verbunden. Der Spiegelkopf 4 liegt über Anschlagmittel 9 und Gegenanschlagmittel 10 am Spiegelfuß 3 an. Ein Gelenkrohr 28 ist mit dem Spiegelfuß 3 einstückig und Teil eines Schwenkgelenks 11

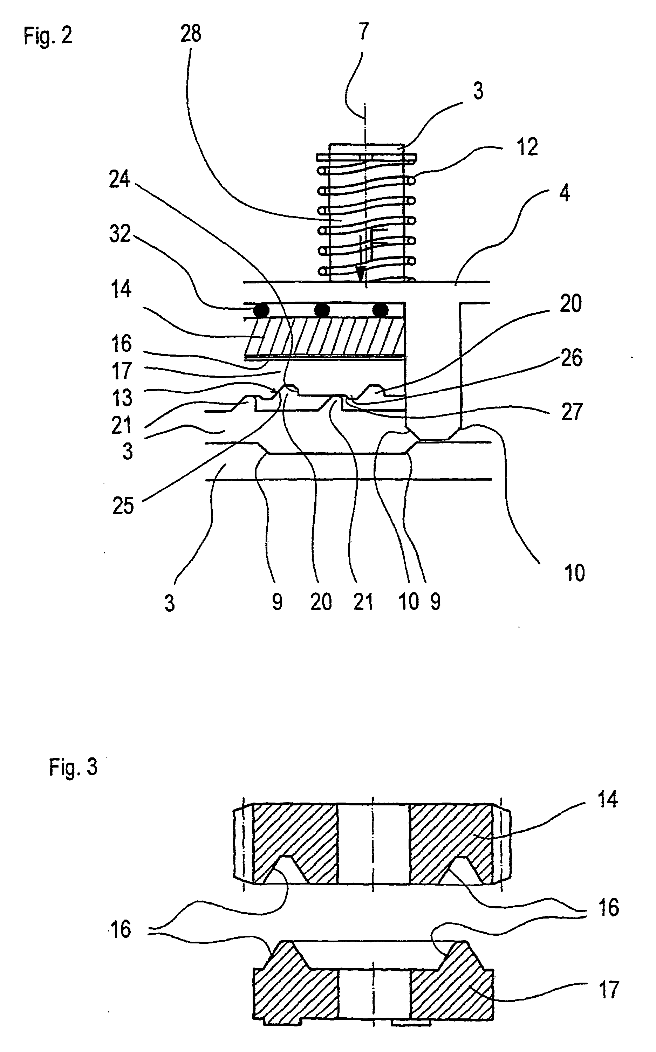

Fig. 2 zeigt eine Prinzipskizze des Antriebs in einer zweiten Stellung in der der Rastring 17 aus den Rastmitteln 13 ausgerastet und der Spiegelkopf 4 gegenüber dem Spiegelfuß 3 angehobenen ist. Der Spiegelkopf 4 befindet sich hier auf einem mittleren Niveau. Die Rastmittel 13 bestehen aus Rastnocken 21 im Spiegelfuß 3 und Rastausnehmungen 20 in dem Rastring 17. Die Rastausnehmungen 20 sind mit unterschiedlich geneigten Flanken 24, 25 versehen, wobei die erste Flanke 24 rechtwinklig oder annähernd rechtwinklig zur Verstellrichtung ausgerichtet ist und die zweite Flanke 25 zur Verstellrichtung geneigt ist, so dass ein Ausrasten bei Einwirkung einer hinreichend großen Kraft möglich ist. An diese zweite Flanke 25 schließt eine vorspringende Anformung 26 an, deren Breite in Schwenkrichtung gering ist und die auf der der Rastausnehmung 20 gegenüberliegenden Seite durch eine als Anschlag dienende geneigte Fläche 27 begrenzt ist. Der Neigungswinkel der Fläche 27 ist dabei so gewählt, dass er nur durch eine äußere Kraft, aber nicht motorisch gegen die Kraft der Druckfeder 12 überwindbar ist. Die vorspringende Anformung 26 dient als Hinderungsmittel gegen eine Fehlbedienung, die dazu führen könnte, dass die Druckfeder 12 keine Kraft mehr auf die Reibfläche 16 zwischen dem Zahnrad 14 und dem Rastring 17 ausüben würde. In so einer Situation wäre der Rückblickspiegel motorisch nicht mehr antreibbar.

Fig. 3 zeigt die Reibfläche 16 zwischen dem Zahnrad 14 und dem Rastring 17 als Ringkonus. Durch Änderung des Konuswinkels kann die Reibkraft auf den gewünschten Wert eingestellt werden.

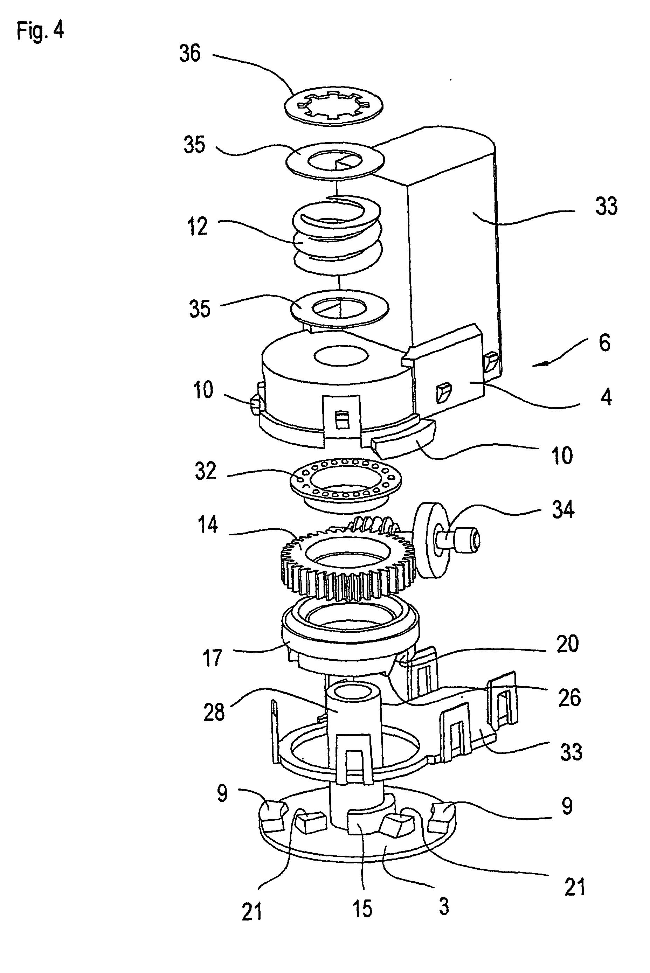

Fig. 4 zeigt eine Explosionsdarstellung des Antriebs mit dem Spiegelfuß 3, dem Gelenkrohr 28, den Anschlägen 9, den Rastnocken 21, einem Klappwegbegrenzer 15, einem Gehäuse 33, dem Rastring 17 mit den Rastausnehmungen 20 und den vorspringenden Anformungen 26, dem Zahnrad 14, einem Untersetzungsgetriebe 34, das hier aus einem zweistufigen Schneckengetriebe besteht und von einem nicht dargestellten Elektrokleinstmotor antreibbar ist, einem Kugellager 32, dem Spiegelkopf 4, den Gegenanschlägen 10, Scheiben 35, der Druckfeder 12 und der Zahnscheibe 36.

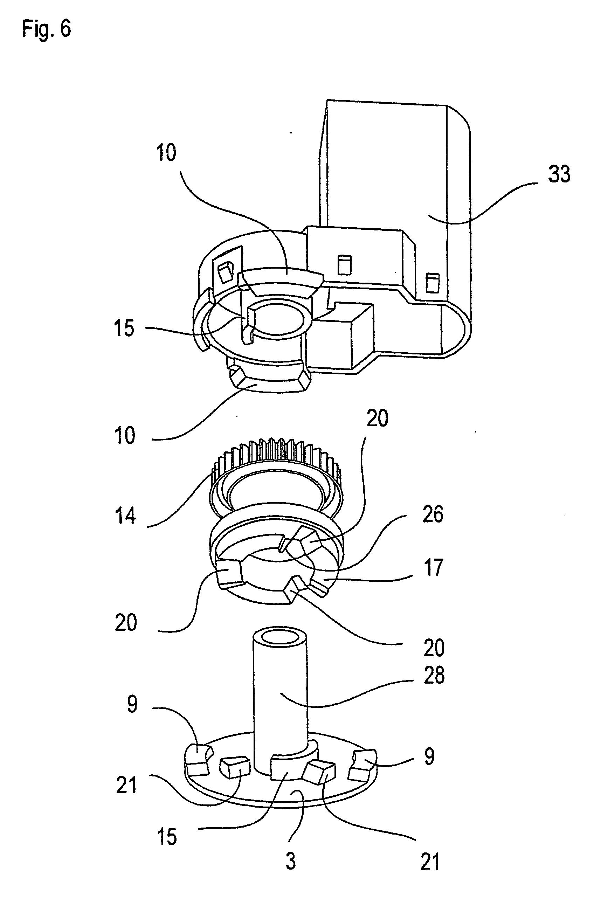

Einen Schnitt durch die Schwenkachse 7 des Antriebs 6 zeigt Fig. 5 mit dem Spiegelfuß 3, den Anschlagmitteln 9, den Rastmitteln 13, dem Rastring 17 mit der Reibfläche 16, dem Antriebsgehäuse 33, dem Zahnrad 14, dem Kugellager 32, der Druckfeder 12, den Scheiben 35 und der Zahnscheibe 36. Zwischen dem Rastring 17 und dem Spiegelfuß 3 ist ein Luftspalt 29 zu erkennen, der eine definierte Auflage der Rastausnehmungen 20 des Rastrings 17 auf den Rastnocken 21 des Spiegelfußes 3 gewährleistet. Die Druckfeder 12 stützt sich einerseits über die eine Scheibe 35 und die Zahnscheibe 36 am Gelenkrohr 28 und damit am Spiegelfuß 3 ab und beaufschlagt andererseits über die zweite Scheibe 35 den Spiegelkopf 4, das Lager 32, das Zahnrad 14 und den Rastring 17 und sorgt damit für eine definierte Reibkraft der Reibfläche 16 und einen sicheren Halt des Rastrings 17 am Spiegelfuß 3.

Fig. 6 zeigt eine weitere etwas vereinfachte Explosiondarstellung von Teilen des Antriebs 6, aus der das Zusammenspiel des Klappwegbegrenzers 15 am Spiegelkopf 4 und am Spiegelfuß 3 deutlich wird.

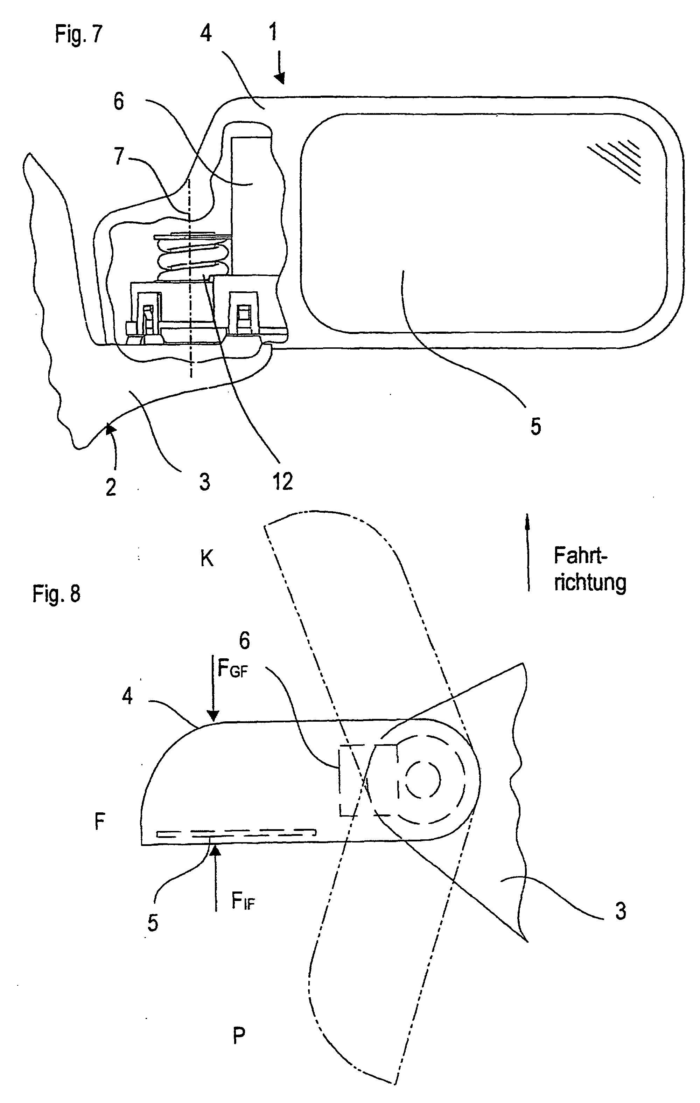

Fig. 7 zeigt den um die Schwenkachse 7 schwenkbaren Außenrückblickspiegel 1 am Kraftfahrzeug 2 mit dem Spiegelglas 5, dem Spiegelfuß 3, und dem Antrieb 6, der über die Druckfeder 12 am Spiegelfuß 3 kraftbeaufschlagt gehalten ist.

Die möglichen Stellungen des Spiegelkopfs 4 sind in Fig. 8 dargestellt. Motorisch wird der Spiegelkopf im Normalbetrieb nur zwischen der Fahrposition F und der Parkstellung P verstellt. Kommt es durch einen von außen auf den Spiegelkopf 4 einwirkenden Schlag zu einem erzwungenen Abklappen des Spiegelkopfs 4 in Fahrtrichtung (Position K), dann ist sowohl eine Rückstellung von Hand, als auch eine motorische Rückstellung möglich. Bei dem genannten Fall wird der Spiegelkopf 4 gegenüber dem Spiegelfuß 3 angehoben und die Rastverbindung zwischen dem Rastring 17 und dem Spiegelfuß 3 aufgehoben. Beim motorischen Zurückstellen ist gewöhnlich ein Synchronisationsvorgang notwendig, um die Rastmittel des Rastrings und des Spiegelfußes wieder in Übereinstimmung zu bringen. Bei einem erzwungenen Abklappen entgegen der Fahrtrichtung (Richtung P) wird der Spiegelkopf 4 nicht angehoben, weil die Flanken der Rastmittel 13 in diese Richtung zu steil sind um überwunden werden zu können. Damit keine Zerstörung des Antriebes eintritt ist eine Reibkupplung (Reibfläche 16) zwischen dem Rastring 17 und dem Zahnrad 14 vorgesehen, deren Reibkraft nur von einer von außen einwirkenden Kraft überwunden werden kann. Bei diesem zweiten möglichen Fall des erzwungenen Abklappens ist keine Synchronisation erforderlich. Der Spiegelkopf 4 muß lediglich in die Fahrposition F zurückgestellt werden. Die Synchronisation ist vor allem deshalb unerwünscht, weil der Bewegungsablauf für den Fahrer nicht verständlich erscheint. Bei einem nach vorne in Fahrtrichtung (K) abgeklappten Spiegelkopf 4 muß dieser zunächst bis zum Klappwegbegrenzer 15 in die nach hinten abgeklappte Stellung gefahren werden, weil vorher kein Widerstand für den Spiegelkopf 4 vorhanden ist, der eine Relativbewegung des Rastrings 17 zum Spiegelfuß 3 ermöglichen würde. In der Anschlagstellung verharrt der Spiegelkopf 4 dann bis die Übereinstimmung der Rastmittel 13 erfolgt ist und erst dann kann der Spiegelkopf 4 wieder in die Fahrposition zurückbewegt werden.

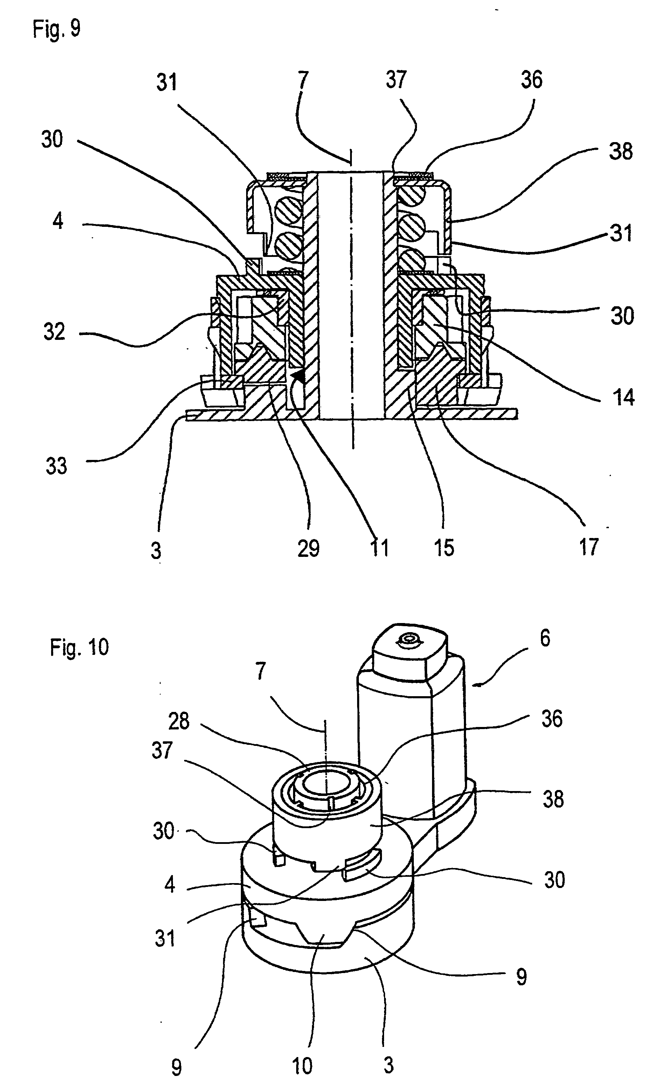

Eine vorteilhafte Weiterbildung des erfindungsgemäßen Außenrückblickspiegels (Fig. 9) erlaubt es nun auf die an sich unnötigen Verfahrwege beim Synchronisationsvorgang zu verzichten. Um dies zu erreichen sind nur geringe Veränderungen am bestehenden Außenrückblickspiegel vorzunehmen. Es muß dafür gesorgt werden, dass ein Stopper in Nähe der Fahrposition F vorhanden ist, der nur in einer abgehobenen Stellung des Spiegelkopfes 4 wirken kann, um den Spiegelkopf auch in die Parkstellung (P) fahren zu können. In Fig. 9 ist eine einfache Realisierungsmöglichkeit dargestellt. Ein Stopper 30, der vorzugsweise einstückig mit dem Gehäuse 33 des Spiegelkopfs 4 ist, hat im Normalbetrieb keine Möglichkeit mit einem spiegelfußfesten Gegenstopper 31 in Anlage zu kommen. Ist der Spiegelkopf 4 jedoch nach vorne in Fahrtrichtung (K) abgeklappt und der Spiegelkopf 4 in Bezug auf den Spiegelfuß 3 angehoben ist ein Anschlagen zwischen dem Stopper 30 und dem Gegenstopper 31 möglich. Die Lage der Stopper 30 und Gegenstopper 31 ist so gewählt, dass die Synchronisation in Fahrposition (F) erfolgen kann. Grundsätzlich kann jedoch jede beliebige Position hierfür gewählt werden. Um den spiegelfußseitigen Gegenstopper 31 zu realisieren ist lediglich eine Scheibe zum Niederhalten der Druckfeder zu einem Topf 38 geformt, an dessen Topfrand die Gegenstopper 31 angeordnet sind. Vorzugsweise sind mindestens zwei Stopper 30 und mindestens zwei Gegenstopper 31 vorgesehen. Da beim erzwungenen Abklappen entgegen der Fahrtrichtung der Spigelkopf 4 in Bezug auf den Spiegelfuß 3 nicht angehoben werden kann, besteht auch nicht die Gefahr einer Kollision zwischen den Stoppern 30 und den Gegenstoppern 31 während des erzwungenen Abklappvorgangs und damit nicht zu einer Beschädigung des Antriebs.

Fig. 10 zeigt eine räumliche Darstellung der beschriebenen Weiterbildung des Antriebs 6, mit dem Spiegelfuß 3 dem Anschlag 9, dem Gegenanschlag 10 am Spiegelkopf 4, dem Stopper 30, dem Topf 38 mit dem Gegenstopper 31, der Zahnscheibe 36, die am Gelenkrohr 28 befestigt ist, einer Verzahnung 37 zwischen dem Topf 38 und dem Gelenkrohr 28, durch welche die Zuordnung des Stoppers 30 zum Gegenstopper 31 definiert ist. Die Stopper 30 bzw. Gegenstopper 31 können an beliebigen Stellen des Spiegelkopfes 4 bzw. des Spiegelfußes 3 montiert sein, auch eine radiale Anordnung in Bezug auf die Schwenkachse 7 ist möglich.

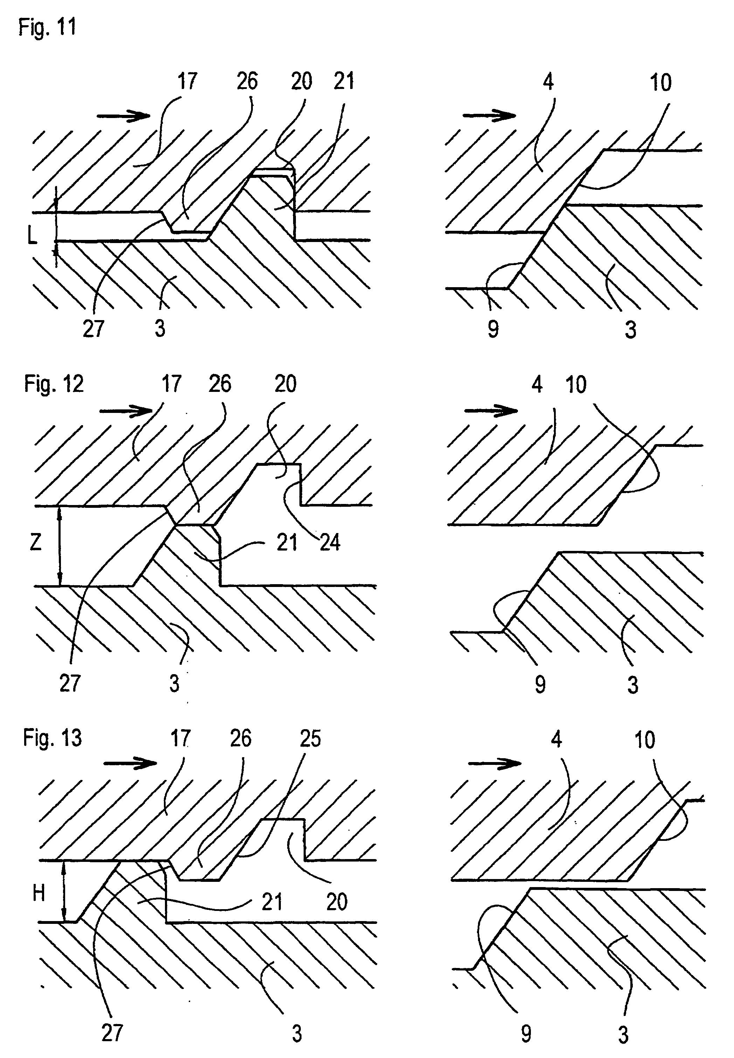

Die Fig. 12, 13 und 14 zeigen die wesentlichen möglichen Stellungen des Rastrings 17 gegenüber dem Spiegelfuß 3 und daneben die dazugehörigen Stellungen zwischen Spigelfuß 3 und Spiegelkopf 4. In Fig. 11 ist die eingerastete Stellung dargestellt, in der der Abstand (L) zwischen dem Rastring 17 und dem Spiegelfuß 3 oder dem Spiegelkopf 4 und dem Spiegelfuß 3 am geringsten ist. In Fig. 12 wird eine Zwischenstellung gezeigt, die nur während der erzwungenen Abklappbewegung in Fahrtrichtung erreicht und sofort wieder verlassen wird. In dieser Stellung erreicht der Abstand zwischen Spiegelfuß 3 und dem Rastring 17 bzw. dem Spigelkopf 4 seinen größten Wert (Z). Die unmittelbar danach eingenommene Stellung wird durch Fig. 13 dargestellt. Der Abstand zwischen Spiegelfuß 3 und dem Rastring 17 bzw. dem Spiegelkopf 4 liegt hierbei in einem mittleren Bereich (H) zwischen den Stellungen (L) und (Z). Die als Anschlag dienende geneigte Fläche 27 der vorspringenden Anformung 26 verhindert bei einer Fehlbedienung, bei der der Spiegelkopf 4 motorisch weiter in Fahrtrichtung angetrieben wird, dass eine Synchronisation stattfinden kann, weil diese zu einem Aufsitzen des Spiegelkopfes 4 auf den Spiegelfuß 3 führen würde und damit zu einem Auskuppeln der Reibkupplung. Motorisch wäre der Spiegelkopf dann nicht mehr zurückstellbar. Die geneigte Fläche 27 bewirkt also ein Blockieren des Antriebs. Dies kann elektronisch oder von der Bedienperson erkannt und der Antrieb somit umgepolt werden. Die Fläche 27 ist angeschrägt, um den Spiegelkopf 4 auch von Hand in seine Ausgangslage zurückbringen zu können.

### Bezugszeichenliste

- 1: Außenrückblickspiegel
- 2: Kraftfahrzeug
- 3: Spiegelfuß
- 4: Spiegelkopf
- 5: Spiegelglas
- 6: Antrieb
- 7: Schwenkachse
- 8: Schwenkweg
- 9: Anschlagmittel
- 10: Gegenanschlagmittel
- 11: Schwenkgelenk
- 12: Druckfeder
- 13: Rastmittel
- 14: Zahnrad
- 15: Klappwegbegrenzer
- 16: Reibfläche
- 17: Rastring
- 20: Rastausnehmungen
- 21: Rastnocken
- 24: geneigte Flanke
- 25: steile Flanke
- 26: vorspringende Anformung
- 27: geneigte Fläche
- 28: Gelenkrohr
- 29: Luftspalt zwischen Spiegelfuß und Rastring
- 30: Stopper
- 31: Gegenstopper
- 32: Kugellager
- 33: Gehäuse
- 34: Untersetzungsgetriebe
- 35: Scheibe
- 36: Zahnscheibe
- 37: Verzahnung
- 38: toppförmige Scheibe

## Patentansprüche

1. Außenrückblickspiegel (1) für ein Kraftfahrzeug (2), mit einem am Kraftfahrzeug (2) zu befestigenden Spiegelfuß (3) und einem Spieglkopf (4), wobei der ein Spiegelglas (5) tragende, mittels eines Antriebes (6) relativ zum Spiegelfuß (3) um eine Schwenkachse (7) zwischen, einen Schwenkweg (8) begrenzende und damit die Fahr- bzw. Parkstellung (F, P) bestimmende, spiegelfußseitige Anschlagmittel (9) und spiegelkopfseitige Gegenanschlagmittel (10) verschwenkbare, am Spiegelfuß (3) über ein Schwenkgelenk (11) befestigte Spiegelkopf (4) unter Schlageinwirkung aus einer Gebrauchslage (F bis P) an das Kraftfahrzeug (2) anklappbar ist, wobei mindestens ein Anschlagmittel (9) und/oder Gegenanschlagmittel (10) in Bezug auf die Schwenkrichtung geneigt ist, einem in der Gebrauchslage (F bis P) unter der Kraftwirkung wenigstens einer Druckfeder (12) über ausrastbare Rastmittel (13) in Schwenkrichtung mit dem Spiegelfuß (3) verbundenen, zwischen Spiegelkopf (4) und Spiegelfuß (3) eingespannten, koaxial zur Schwenkachse (7) angeordneten und mit dem Antrieb (6) getrieblich in Eingriff stehenden Zahnrad (14) und einem Klappwegbegrenzer (15) zwischen Spiegelkopf (4) und Spiegelfuß (3), der ein Anschlagen des Spiegelkopfs (4) an die Karosserie des Kraftfahrzeugs (2) verhindert, wobei
a) das Zahnrad (14) über zumindest eine Reibfläche (16) mit einem mit den Rastmitteln (13) versehenen, im wesentlichen ringförmigen und koaxial zur Schwenkachse (7) angeordneten Rastring (17) flächig verbunden ist, und wobei der Rastring (17) zwischen dem Zahnrad (14) und dem Spiegelfuß (3) angeordnet ist,
**dadurch gekennzeichnet, dass**
b) die Rastmittel (13) am Rastring (17) und am Spiegelfuß (3) so geformt sind, dass das Ausrastmoment bei Einwirkung einer in Fahrtrichtung auf den Spiegelkopf (4) gerichteten äußeren Kraft (F_{IF}) wesentlich kleiner ist als bei Einwirkung einer gegen die Fahrtrichtung auf den Spiegelkopf (4) gerichteten äußeren Kraft (F_{GF}) und
c) das Reibmoment zwischen dem Zahnrad (14) und dem Rastring (17), bei Einwirkung einer in Fahrtrichtung auf den Spiegelkopf (4) gerichteten äußeren Kraft (F_{IF}), größer und, bei Einwirkung einer gegen die Fahrtrichtung auf den Spiegelkopf (4) gerichteten äußeren Kraft (F_{GF}), kleiner ist als das Ausrastmoment zwischen dem Rastring (17) und dem Spiegelfuß (3).

2. Außenrückblickspiegel nach Anspruch 1, **dadurch gekennzeichnet, dass** die Rastmittel (13) in Form von Rastnocken (21) und Rastausnehmungen (20) ausgebildet sind, deren Flanken (24, 25) unterschiedlich geneigt sind.

3. Außenrückblickspiegel nach Anspruch 1 oder 2, **dadurch gekennzeichnet, dass** der Spiegelkopf (4) in Bezug auf den Spiegelfuß (3) mehrere Höhenniveaus einnehmen kann, wobei auf allen Höhenniveaus und in allen Drehwinkelstellungen des Spiegelkopfs (4) mindestens Reibschluß zwischen dem Zahnrad (14) und dem Rastring (17) besteht, der durch die Druckfeder (12) aufrechterhalten wird.

4. Außenrückblickspiegel nach Anspruch 1, 2 oder 3, **dadurch gekennzeichnet, dass** der Spiegelkopf (4) in Bezug auf den Spiegelfuß (3) ein niedriges Höhenniveau (L) und ein mittleres Höhenniveaus (H) einnehmen kann, wobei bei der Überführung des Spiegelkopfes (4) von dem niedrigen Höhenniveau (L) auf das mittlere Höhenniveau (H) ein drittes Höhenniveau (Z) überwunden werden muß.

5. Außenrückblickspiegel nach Anspruch 4, **dadurch gekennzeichnet, dass** das dritte Höhenniveau (Z) durch vorspringende Anformungen (26) im Anschluss an die Rastausnehmungen (20) ermöglicht wird.

6. Außenrückblickspiegel nach Anspruch 4 oder 5, **dadurch gekennzeichnet, dass** das dritte Höhenniveau (Z) motorisch weder vom niedrigen Höhenniveau (L) noch vom mittleren Höhenniveau (H) aus erreichbar ist.

7. Außenrückblickspiegel nach Anspruch 4, 5 oder 6, **dadurch gekennzeichnet, dass** das niedrige Höhenniveau (L) nur zwischen der Fahrposition (F) und der Parkposition (P) möglich ist.

8. Außenrückblickspiegel nach Anspruch 4, 5, 6 oder 7, **dadurch gekennzeichnet, dass** das mittlere Höhenniveau (H) nur in nach vorne in Fahrtrichtung abgeklappten Spiegelpositionen (K) möglich ist.

9. Außenrückblickspiegel nach Anspruch 4, 5, 6, 7 oder 8, **dadurch gekennzeichnet, dass** das dritte Höhenniveau (Z) nur zwischen der Fahrposition (F) und einer nach vorne in Fahrtrichtung abgeklappten Spiegelposition (K) möglich ist.

10. Außenrückblickspiegel nach Anspruch 4, 5, 6, 7, 8 oder 9, **dadurch gekennzeichnet, dass** das dritte Höhenniveau (Z) nur kurzzeitig während der Einwirkung einer in Fahrtrichtung auf den Spiegelkopf (4) einwirkenden äußeren Kraft (F_{IF}) erreicht und anschließend aufgrund der Dynamik wieder verlassen wird, wonach das mittlereHöhenniveau (H) eingenommen wird.

11. Außenrückblickspiegel nach Anspruch 4, 5, 6, 7, 8, 9 oder 10, **dadurch gekennzeichnet, dass** der Übergang zwischen dem mittleren Höhenniveau (H) und dem dritten Höhenniveau (Z) in Form eines Anschlages ausgebildet ist.

12. Außenrückblickspiegel nach Anspruch 11, **dadurch gekennzeichnet, dass** der Anschlag durch eine Fläche (27) an der vorspringenden Anformung (26) gebildet wird, wobei die Fläche (27) in Bezug auf eine zur Schwenkachse (7) rechtwinkligen Ebene geneigt ist.

13. Außenrückblickspiegel nach Anspruch 12, **dadurch gekennzeichnet, dass** die Neigung der Fläche (27) so gewählt ist, dass die vorspringende Anformung (26) motorisch nicht überwindbar ist.

14. Außenrückblickspiegel nach Anspruch 12 oder 13, **dadurch gekennzeichnet, dass** die Neigung der Fläche (27) so gewählt ist, dass die vorspringende Anformung (26) von einer äußeren gegen die Fahrtrichtung auf den Spiegelkopf (4) einwirkenden Kraft (F_{GF}) überwindbar ist, wobei der Spiegelkopf (4) gegen die Kraft der Druckfeder kurzzeitig auf das dritte Niveau (Z) angehoben und anschließend auf das niedrige Niveau (L) abgesenkt wird.

15. Außenrückblickspiegel nach zumindest einem der vorhergehenden Ansprüche, **dadurch gekennzeichnet, dass** die Reibfläche (16) zwischen dem Zahnrad (14) und dem Rastring (17) konusförmig ausgebildet ist.

16. Außenrückblickspiegel nach zumindest einem der vorhergehenden Ansprüche, **dadurch gekennzeichnet, dass** am Spiegelkopf (4) ein Stopper (30) und am Spiegelfuß (3) ein Gegenstopper (31) vorgesehen ist, der Stopper (30) in der Fahrposition (F) oder in der Nähe der Fahrposition (F) in Schwenkrichtung an dem Gegenstopper (31) anschlagbar ist, wenn die ausrastbaren Rastmittel (13) sich in einem ausgerasteten Zustand befinden und der Stopper (30) in keiner Schwenkstellung mit dem Gegenstopper (31) anschlagbar ist, wenn die ausrastbaren Rastmittel (13) sich im eingerasteten Zustand befinden.

## Claims

1. An external rear-view mirror (1) for a motor vehicle (2), having a mirror base (3) to be fastened to the motor vehicle (2) and a mirror head (4), wherein the mirror head (4) is capable of being folded from a position of use (F to P) against the motor vehicle (2) under the action of an impact, the mirror head (4) supporting a mirror glass (5) and being pivotable by means of a drive (6) relative to the mirror base (3) about a pivot axis (7) between stop means (9) on the mirror base and counter stop means (10) on the mirror head - which bound a pivoting path (8) and thus determine the driving and parking positions (F, P) respectively - and being fastened to the mirror base (3) by way of a pivoting joint (11), wherein at least one stop means (9) and/or counter stop means (10) is or are inclined with respect to the pivoting direction, the rear-view mirror having a toothed wheel (14) connected to the mirror base (3) in the position of use (F to P) under the action of force of at least one compression spring (12) by way of disengageable catch means (13) in the pivoting direction and clamped between the mirror head (4) and the mirror base (3) and arranged coaxially with the pivot axis (7) and engaging with the drive (6) by means of a gear, and the rear-view mirror having a folding-path limit means (15) between the mirror head (4) and the mirror base (3) which prevents the mirror head (4) from knocking against the bodywork of the motor vehicle (2), wherein
a) the toothed wheel (14) is connected in a planar manner by way of at least one friction face (16) to a catch ring (17) which is provided to the catch means (13) and which is substantially annular and is arranged coaxially with the pivot axis (7), and wherein the catch ring (17) is arranged between the toothed wheel (14) and the mirror base (3),
**characterized in that**
b) the catch means (13) are formed on the catch ring (17) and on the mirror base (3) in such a way that the disengagement moment is substantially smaller during the action of an external force (**F**_{**IF**}) directed onto the mirror head (4) in the direction of travel than during the action of an external force (**F**_{**GF**}) directed onto the mirror head (4) contrary to the direction of travel, and
c) the moment of friction between the toothed wheel (14) and the catch ring (17) is greater during the action of an external force (**F**_{**IF**}) directed onto the mirror head (4) in the direction of travel and is smaller during the action of an external force (**F**_{**GF**}) directed onto the mirror head (4) contrary to the direction of travel than the disengagement moment between the catch ring (17) and the mirror base (3).

2. An external rear-view mirror according to Claim 1, **characterized in that** the catch means (13) are constructed in the form of catch cams (21) and catch recesses (2), the flanks (24, 25) of which are inclined differently.

3. An external rear-view mirror according to Claim 1 or 2, **characterized in that** the mirror head (4) can occupy a plurality of vertical levels with respect to the mirror base (3), wherein at all vertical levels and in all positions of angular rotation of the mirror head (4) at least friction locking is present between the toothed wheel (14) and the catch ring (17), which is maintained by the compression spring (12).

4. An external rear-view mirror according to Claim 1, 2 or 3, **characterized in that** the mirror head (4) can occupy a low vertical level (**L**) and a middle vertical level (**H**) with respect to the mirror base (3), wherein during the transfer of the mirror head (4) from the low vertical level (**L**) to the middle vertical level (**H**) a third vertical level (**Z**) has to be overcome.

5. An external rear-view mirror according to Claim 4, **characterized in that** the third vertical level (**Z**) is made possible by projecting integrally moulded portions (26) adjoining the catch recesses (20).

6. An external rear-view mirror according to Claim 4 or 5, **characterized in that** it is not possible to reach the third vertical level (**Z**) by the motor either from the low vertical level (**L**) or from the middle vertical level (**H**).

7. An external rear-view mirror according to Claim 4, 5 or 6, **characterized in that** the low vertical level (**L**) is possible only between the driving position (**F**) and the parking position (**P**).

8. An external rear-view mirror according to Claim 4, 5, 6 or 7, **characterized in that** the middle vertical level (**H**) is possible only in mirror positions (**K**) folded forwards in the direction of travel.

9. An external rear-view mirror according to Claim 4, 5, 6, 7 or 8, **characterized in that** the third vertical level (**Z**) is possible only between the driving position (**F**) and a mirror position (**K**) folded forwards in the direction of travel.

10. An external rear-view mirror according to Claim 4, 5, 6, 7, 8 or 9, **characterized in that** the third vertical level (**Z**) is reached only briefly during the action of an external force (**F**_{**IF**}) acting upon the mirror head (4) in the direction of travel and is subsequently left again as a result of the dynamics, after which the middle vertical level (**H**) is occupied.

11. An external rear-view mirror according to Claim 4, 5, 6, 7, 8, 9 or 10, **characterized in that** the transition between the middle vertical level (**H**) and the third vertical level (**Z**) is constructed in the form of a stop.

12. An external rear-view mirror according to Claim 11, **characterized in that** the stop is formed by a face (27) on the projecting integrally moulded portion (26), wherein the face (27) is inclined with respect to a plane at a right angle to the pivot axis (7).

13. An external rear-view mirror according to Claim 12, **characterized in that** the inclination of the face (27) is selected to be such that the projecting integrally moulded portion (26) is not capable of being overcome by the motor.

14. An external rear-view mirror according to Claim 12 or 13, **characterized in that** the inclination of the face (27) is selected to be such that the projecting integrally moulded portion (26) is capable of being overcome by an external force (**F**_{**GF**}) acting upon the mirror head (4) contrary to the direction of travel, wherein the mirror head (4) is briefly raised to the third level (**Z**) against the force of the compression spring and is subsequently lowered to the low level (**L**).

15. An external rear-view mirror according to at least one of the preceding Claims, **characterized in that** the friction face (16) is formed in a conical manner between the toothed wheel (14) and the catch ring (17).

16. An external rear-view mirror according to at least one of the preceding Claims, **characterized in that** a stopper (30) is provided on the mirror head (4) and a counter-stopper (31) is provided on the mirror base (3), the stopper (30) being capable of striking against the counter-stopper (31) in the driving position (**F**) or in the vicinity of the driving position (**F**) in the pivoting direction when the disengageable catch means (13) are in a disengaged state, and the stopper (30) not being capable of striking against the counter-stopper (31) in any pivoting position when the disengageable catch means (13) are in the engaged state.

## Revendications

1. Rétroviseur extérieur (1) pour un véhicule automobile (2), comportant un pied (3) à fixer sur le véhicule automobile (2) et une tête (4), dans lequel la tête (4), qui porte un verre-miroir (5) et est mobile en pivotement autour d'un axe de pivotement (7) par rapport au pied (3) au moyen d'un entraînement (6) entre des moyens de butée (9) côté pied limitant une course de pivotement (8) et déterminant ainsi la position de circulation ou de stationnement (F, P) et des moyens de butée antagonistes (10) côté tête, et qui est fixée sur le pied (3) via une articulation de pivotement (11), est rabattable contre le véhicule automobile (2) hors d'une position d'utilisation (F à P) sous l'effet d'un choc, au moins un moyen de butée (9) et/ou un moyen de butée antagoniste (10) étant incliné par rapport à la direction de pivotement, et comportant une roue dentée (14) reliée en direction de pivotement au pied (3) sous l'effet d'au moins un ressort de compression (12) dans la position d'utilisation (F à P) via des moyens d'enclenchement (13) susceptibles d'être déclenchés, serrée entre la tête (4) et le pied (3), agencée coaxialement à l'axe de pivotement (7) et en engrènement avec l'entraînement (6), et comportant un limiteur de course de rabattement (15) entre la tête (4) et le pied (3), qui empêche une venue en butée de la tête (4) contre la carrosserie du véhicule automobile (2),
dans lequel
a) la roue dentée (14) est reliée à plat via au moins une surface de friction (16) à une bague d'enclenchement (17) pourvue des moyens d'enclenchement (13), sensiblement en forme annulaire et agencée coaxialement à l'axe de pivotement (7), et la bague d'enclenchement (17) est agencée entre la roue dentée (14) et le pied (3),
**caractérisé en ce que**
b) les moyens d'enclenchement (13) sont formés sur la bague d'enclenchement (17) et sur le pied (3) de telle sorte que le couple de déclenchement sous l'effet d'une force extérieure (F_{IF}) dirigée en direction de circulation sur la tête (4) est considérablement inférieur à celui sous l'effet d'une force extérieure (F_{GF}) dirigée en sens opposé à la direction de circulation sur la tête (4), et
c) sous l'effet d'une force extérieure (F_{IF}) dirigée dans la direction de circulation sur la tête (4), le couple de friction entre la roue dentée (14) et la bague d'enclenchement (17) est supérieur au couple de déclenchement entre la bague d'enclenchement (17) et le pied (3), et sous l'effet d'une force extérieure (F_{GF}) dirigée en sens opposé à la direction de circulation sur la tête (4), il est inférieur audit couple de déclenchement.

2. Rétroviseur extérieur selon la revendication 1, **caractérisé en ce que** les moyens d'enclenchement (13) sont réalisés sous forme de cames d'enclenchement (21) et d'évidements d'enclenchement (20) dont les flancs (24, 25) présentent des inclinaisons différentes.

3. Rétroviseur extérieur selon l'une ou l'autre des revendications 1 et 2, **caractérisé en ce que** la tête (4) peut occuper plusieurs niveaux en hauteur par rapport au pied (3), au moins une coopération de friction entre la roue dentée (14) et la bague d'enclenchement (17) existant à tous les niveaux en hauteur et dans toutes les positions angulaires de la tête (4), coopération qui est maintenue par le ressort de compression (12).

4. Rétroviseur extérieur selon les revendications 1, 2 ou 3, **caractérisé en ce que** la tête (4) peut occuper un niveau en hauteur bas (L) et un niveau en hauteur moyen (H) par rapport au pied (3), et lors du transfert de la tête (4) depuis le niveau en hauteur bas (L) vers le niveau en hauteur moyen (H), un troisième niveau en hauteur (Z) doit être surmonté.

5. Rétroviseur extérieur selon la revendication 4, **caractérisé en ce que** le troisième niveau en hauteur (Z) est permis par des conformations saillantes (26) à la suite des évidements d'enclenchement (20).

6. Rétroviseur extérieur selon l'une ou l'autre des revendications 4 et 5, **caractérisé en ce que** le troisième niveau en hauteur (Z) ne peut être atteint par voie motorisée ni depuis le niveau en hauteur bas (L) ni depuis le niveau en hauteur moyen (H).

7. Rétroviseur extérieur selon les revendications 4, 5 ou 6, **caractérisé en ce que** le niveau en hauteur bas (L) est permis uniquement entre la position de circulation (F) et la position de stationnement (P).

8. Rétroviseur extérieur selon les revendications 4, 5, 6 ou 7, **caractérisé en ce que** le niveau en hauteur moyen (H) est permis uniquement dans des positions (K) du rétroviseur rabattues vers l'avant en direction de circulation.

9. Rétroviseur extérieur selon les revendications 4, 5, 6, 7 ou 8, **caractérisé en ce que** le troisième niveau en hauteur (Z) est permis uniquement entre la position de circulation (F) et une position (K) du rétroviseur rabattue vers l'avant en direction de circulation.

10. Rétroviseur extérieur selon les revendications 4, 5, 6, 7, 8 ou 9, **caractérisé en ce que** le troisième niveau en hauteur (Z) est atteint uniquement brièvement pendant l'effet d'une force extérieure (F_{IF}) agissant en direction de circulation sur la tête (4), et ensuite il est quitté du fait de la dynamique, suite à quoi le niveau en hauteur moyen (H) est occupé.

11. Rétroviseur extérieur selon les revendications 4, 5, 6, 7, 8, 9 ou 10, **caractérisé en ce que** la transition entre le niveau en hauteur moyen (H) et le troisième niveau en hauteur (Z) est réalisée sous la forme d'une butée.

12. Rétroviseur extérieur selon la revendication 11, **caractérisé en ce que** la butée est formée par une surface (27) sur la conformation saillante (26), la surface (27) étant inclinée par rapport à un plan perpendiculaire à l'axe de pivotement (7).

13. Rétroviseur extérieur selon la revendication 12, **caractérisé en ce que** l'inclinaison de la surface (27) est choisie de telle sorte que la conformation saillante (26) n'est pas surmontable par voie motorisée.

14. Rétroviseur extérieur selon l'une ou l'autre des revendications 12 et 13, **caractérisé en ce que** l'inclinaison de la surface (27) est choisie de telle sorte que la conformation saillante (26) est surmontable par une force extérieure (F_{GF}) agissant en sens opposé à la direction de circulation sur la tête (4), la tête (4) étant soulevée brièvement vers le troisième niveau (Z) à l'encontre de la force du ressort de compression et étant abaissé ensuite vers le niveau bas (L).

15. Rétroviseur extérieur selon l'une au moins des revendications précédentes, **caractérisé en ce que** la surface de friction (16) entre la roue dentée (14) et la bague d'enclenchement (17) est réalisée en forme conique.

16. Rétroviseur extérieur selon l'une au moins des revendications précédentes, **caractérisé en ce que** un arrêt (30) est prévu sur la tête (4) et un contre-arrêt (31) est prévu sur le pied (3), **en ce que** l'arrêt (30) est susceptible de venir buter contre le contre-arrêt (31) en direction de pivotement dans la position de circulation (F) ou à proximité de la position de circulation (F), lorsque les moyens d'enclenchement (13) susceptibles d'être déclenchés se trouvent dans un état déclenché, et **en ce que** l'arrêt (30) n'est susceptible de venir buter contre le contre-arrêt (31) dans aucune position de pivotement lorsque les moyens d'enclenchement (13) susceptibles d'être déclenchés se trouvent dans l'état enclenché.
